# EUROPÄISCHE PATENTSCHRIFT

(11) **EP 0 792 730 B1**
(45) Veröffentlichungstag und Bekanntmachung des Hinweises auf die Patenterteilung: **11.04.2001**
(21) Anmeldenummer: 97100787.7
(22) Anmeldetag: 20.01.1997
(51) Int. Cl.: B29B 17/02

(54) **Verfahren zum Trennen von Glas und Folien insbesondere von Verbundscheiben**
Method for separating glass and foils, in particular laminated glass
Procédé de séparation de verre et feuilles, notamment de verre laminé

(30) Priorität: 02.03.1996 DE 19608045
(43) Veröffentlichungstag der Anmeldung: 03.09.1997
(73) Patentinhaber: TZN Forschungs- und Entwicklungszentrum Unterlüss GmbH, D-29345 Unterlüss (DE)
(72) Erfinder: Hofmann, Jürgen, 29410 Salzwedel (DE); Demski, Hans-Otto, Prof., 21521 Aumühle (DE)
(74) Vertreter: Behrend, Rainer

(56) Entgegenhaltungen:
- EP-A- 0 567 876
- DE-C- 19 509 244
- PATENT ABSTRACTS OF JAPAN vol. 096, no. 003, 29. März 1996 & JP 07 291682 A (NIPPON SHEET GLASS CO LTD;OTHERS: 01), 7. November 1995

## Beschreibung

Gegenstand der Erfindung ist ein Verfahren nach dem Oberbegriff des Patentanspruches 1.

Bekannt sind Verfahren zum Trennen von Glas und Folie mittels Walzenbrecher, Zahnwalzenbrecher oder Hammermühlen. Hierbei erfolgt ein Abtrennen der Glasmasse von der Folie von ca. 80 %. Die Restfolie mit Glas geht in die Verbrennung. Nachteilig dabei ist der Verschleiß an Brechern, sowie die Zerkleinerung der Folie. Gleichfalls entsteht Glasstaub, was ein umweltfreundliches Recycling nicht gewährleistet.

Weiterhin ist ein Trennverfahren von Glas und Folie gemäß dem einleitenden Teil des Anspruchs 1 aus dem Patentschrift JP-A-7 291 602 bekannt.

Der Erfindung liegt die Aufgabe zugrunde, ein umweltfreundliches Recyclingverfahrei zum Trennen von Verbundscheiben aufzuzeigen. Gelöst wird die Aufgabe durch die im Patentanspruch 1 genannten kennzeichnenden Merkmale.

Durch das Einbringen der vorgebrochenen Verbundscheiben in ein Wärmebad erfolgt eine 99%-ige Trennung des Glases von der Folie. Die Folie wird nicht zerkleinert, so daß sie dem Stoffkreislauf wieder zugeführt werden kann und nicht verbrannt werden muß. Das Glas kann vollständig wieder eingeschmolzen werden.

Vorteilhafte Ausführungen des Verfahrens sind in den Unteransprüchen enthalten. Anhand eines Ausführungsbeispieles soll mit Hilfe von einer Zeichnung das Verfahren näher erläutert werden.

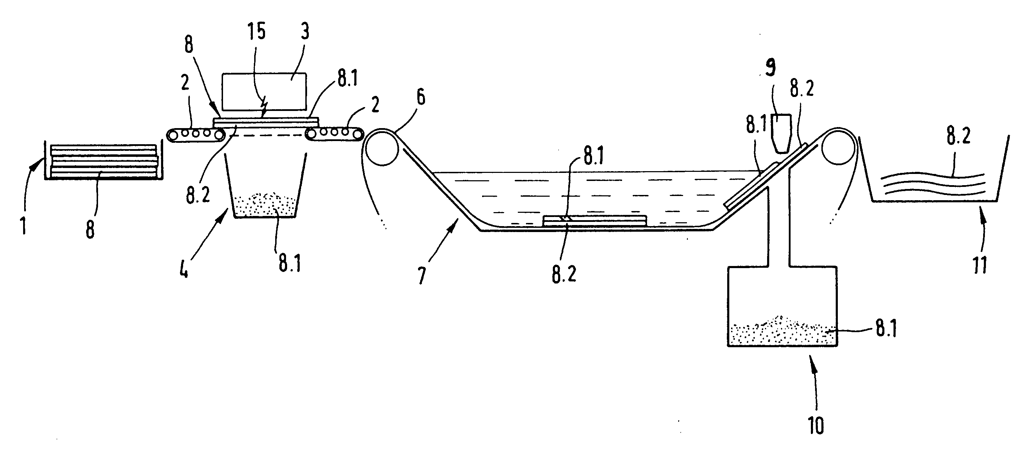

Es zeigt in Fig. 1 eine Prinzipdarstellung des Verfahrensablaufes.

In Fig. 1 mit 1 gekennzeichnet ist eine Anlieferungsstation von Verbundscheiben 8 bestehend aus einer Glasschicht 8.1 und einer Folie 8.2, beispielsweise PVC-Folie (Polyvinylchlorid). Daran anschließend befindet sich eine Transporteinrichtung 2, die in Verbindung mit einer Vorbrech- bzw. Zerkleinerungseinrichtung 3 steht. Dabei weist die Transporteinrichtung 2 vorzugsweise einen siebartigen Aufbau auf, d.h. in der Transporteinrichtung 2 befinden sich nach unten durchgehende Löcher. An den seitlichen Rändern der Transporteinrichtung 2 können herkömmliche Greifsysteme zum Halten der Verbundscheibe 8 angebracht sein. Unterhalb der Zerkleinerungseinrichtung 3 befindet sich ein Sammelbehälter 4. Eine weitere Transporteinrichtung 6 ähnlich der Transporteinrichtung 2 ist der Zerkleinerungseinrichtung 3 nachgeordnet. Die Transporteinrichtung 6, an deren seitlichen Rändern vorzugsweise Greifsysteme (nicht dargestellt) zum Halten der Folie 8.2 mit vorgebrochner Glasschicht 8.1 angebracht sind, beispielsweise Saugeinrichtungen oder Greifleisten ähnlich einer Papierhalterung, verläuft in ihrer Bahn durch ein Wärmebad 7, beispielsweise Wasserbad. Vorzugsweise am hinteren Ende des Wärmebades 7 befindet sich eine Ablöse-Trenneinrichtung 9. Diese kann auch außerhalb des Wärmebades 7 liegen. Dabei tritt aber ein Wärmeverlust der erhitzten Verbundscheibe 8 auf, so daß das Abtrennen des Glases 8.1 einer höheren Energie durch die Ablöse-Trenneinrichtung 5 bedarf. Dem Wärmebad 7 nachfolgend, vorzugsweise unterhalb der Ablöse-Trenneinrichtung 9 im Bereich des Wärmebades 7 befindet sich ein Auffangcontainer 10, am Ende der Transporteinrichtung 6 ein weiterer Auffangcontainer 11.

Das Verfahren läuft wie folgt ab:

Dem Anlieferungscontainer 1 werden die Verbundscheiben 8 entnommen und auf die Transporteinrichtung 2 der Zerkleinerungseinrichtung 3 zugeführt. Dieses Zerkleinern bzw. Vorbrechen kann mit Hilfe eines nicht näher dargestellten gekapselten Energiewandlers erfolgen.

Dabei wird ein Hochleistungspuls 15 im gekapselten Energiewandler 3 erzeugt und über eine Membran des Energiewandlers 3 direkt auf die Verbundscheibe 8 eingekoppelt. Die Erzeugung des Hochleistungspulses 15 erfolgt in einer nicht näher dargestellten Energieversorgung mittels einer darin befindlichen Impulsgleichstromquelle und einer Kondensatorbatterie in herkömmlicher Weise. Für das Vorbrechen auf eine Glasstückgröße, z.B. kleiner 50 mm², sind je nach Zusammensetzung des Verbundes unterschiedliche Parameter der Hochleistungspulse 15 notwendig. Bezogen auf 1m² der Verbundscheibe 8 ist es vorteilhaft, eine Energie von 2 - 8 KJ pro Puls sowie eine Pulsanzahl von 10 - 40 Pulsen zu verwenden. Es sind aber auch herkömmliche Verfahren zur Zerkleinerung von Glas möglich, beispielsweise durch einen Walzenstuhl mit speziell geformten Walzen.

Die vorgebrochene Verbundscheibe 8 wird über die Transporteinrichtung 6 ins Wärmebad 7, welches vorzugsweise eine Temperatur von 40 - 70° - besitzt, gebracht. Dort erhitzt sich die Verbundscheibe 8. Durch die Erhitzung der vorgebrochenen Verbundscheibe 8 und einer vorzugweisen Verweildauer von 10 - 30 min reduziert sich die Haftung der Glasstücke 8.1 auf der Folie 8.2. Ein in der Ablöse-Trenneinrichtung 9 erzeugter Hochdruckwasserstrahl, beispielsweise bis zu 6 bar, realisiert ein Ablösen des Restglases 8.1 von der Folie 8.2. Das Ablösen ist aber auch mit einem Schaber oder einer schaberähnlichen Vorrichtung an Stelle des Hochdruckwasserstrahles oder in Kombination realisierbar. Über die Transporteinrichtung 6 wird die Folie 8.2 dem Auffangcontainer 11 zugeführt, während das abgelöste Glas 8.1 in den Auffangcontainer 10 durchfällt.Dabei kann ein Teil des Wassers aus dem Wasserbad 7 oder des Hochdruckwasserstrahles in den Auffangcontainer gelangen. Dieses wird in nicht dargestellter bekannten Art und Weise aus dem Auffangcontainer abgesaugt/gefiltert.
Zur Reinigung des Wärmebades 7 kann zusätzlich ein nicht näher dargestelltes Katzenband in das Wärmebad 7 eingebracht werden. Es nimmt die bereits im Wärmebad 7 abgelagerten Glasteile 8.1 auf und transportiert diese aus dem Wärmebad 7.

Es sind mit vorgenannten Verfahren auch Verbundscheiben 8, bestehend aus zwei Glasschichten 8.1 und einer dazwischen befindlichen Folie 8.2 (nicht dargestellt) bearbeitbar. Durch geeignete Anbringungen der Ablösetrennrichtung 9 oberhalb und unterhalb der Transporteinrichtung 6, die in diesem Fall hauptsächlich aus den bereits erwähnten Greifsystemen besteht, erfolgt das Ablösen der beiden Glasschichten 8.1 von der Folie 8.2. Auch hier bleibt die Folie heil und kann weiter verwendet werden.

### BEZUGSZEICHEN

- 1: Anlieferungsstation
- 2: Transporteinrichtung
- 3: Vorbrecheinrichtung
- 4: Sammelbehälter
- 6: Transporteinrichtung
- 7: Wärmebad
- 8: Verbundscheibe
- 8.1: Glas
- 8.2: Folie
- 9: Hochdruckwasserstrahl
- 10: Auffangcontainer
- 11: Auffangcontainer
- 15: Hochleistungspuls

## Patentansprüche

1. Verfahren zum Trennen von Glas und Folien insbesondere von Verbundscheiben wobei
- die Verbundscheibe (8) in einer Zerkleinerungseinrichtung (3) zugeführt und gebrochen werden,
dadurch gekennzeichnet, daß
- die gebrochenen Verbundscheiben (8) in einem Wärmebad (7) erhitzt werden und durch eine Ablöse-Trenneinrichtung (9) die restliche Trennung des Glases (8.1) von der Folie (8.2) erfolgt.

2. Verfahren nach Anspruch 1, dadurch gekennzeichnet, daß
die Zerkleinerungseinrichtung (3) ein gekapselter Energiewandler ist.

3. Verfahren nach Anspruch 1 oder 2, dadurch gekennzeichnet, daß der Energiewandler einen Hochleistungspuls (15) auf die Verbundscheibe (8) direkt einkoppelt.

4. Verfahren nach einem oder mehreren der vorgenannten Ansprüche, dadurch gekennzeichnet, daß
der Hochleistungspuls (15) eine Energie von 2 - 8 KJ pro Puls aufweist.

5. Verfahren nach einem oder mehreren der vorgenannten Ansprüche, dadurch gekennzeichnet, daß
der Hochleistungspuls (15) eine Pulshäufigkeit von 10 - 40 Puls besitzt.

6. Verfahren nach Anspruch 1, dadurch gekennzeichnet ,daß die Zerkleinerungseinrichtung (3) ein Walzenstuhl ist.

7. Verfahren nach Anspruch 1, dadurch gekennzeichnet, daß das Wärmebad (7) eine Temperatur von 40 - 70°C hat.

8. Verfahren nach Anspruch 1, dadurch gekennzeichnet, daß
die Zuführung der Verbundscheibe (8) durch siebartige Transporteinrichtungen (2; 6) zu den einzelnen Stationen erfolgt.

9. Verfahren nach Anspruch 8, dadurch gekennzeichnet, daß die Transporteinrichtungen (2; 6) an ihren seitlichen Rändern Greifsysteme aufweisen, um die Verbundscheibe (8) zu halten.

10. Verfahren nach Anspruch 1, dadurch gekennzeichnet, daß das Trennen durch die Ablöse- Trenneinrichtung (9) mittels einem Hochdruckwasserstrahl erfolgt.

11. Verfahren nach Anspruch 1, dadurch gekennzeichnet, daß das Trennen durch
die Ablöse-Trenneinrichtung (9) mittels einem Schaber erfolgt.

## Claims

1. A process for separating glass and films, in particular of multi-layer panes of glass, in which
the multi-layer pane (8) of glass is fed into a comminution device (3) and broken,
**characterised in that**
the broken multi-layer panes (8) of glass are heated in a heating bath (7) and the rest of the procedure of separating the glass (8.1) from the film (8.2) is carried out by a loosening/separating device (9).

2. A process according to Claim 1, **characterised in that** the comminution device (3) is an enclosed power converter.

3. A process according to Claim 1 or 2, **characterised in that** the power converter injects a high-power pulse (15) directly onto the multi-layer pane (8) of glass.

4. A process according to one or more of the preceding claims, **characterised in that** the high-power pulse (15) has an energy of 2 - 8 kJ per pulse.

5. A process according to one or more of the preceding claims, **characterised in that** the high-power pulse (15) has a pulse frequency of 10-40 pulses.

6. A process according to Claim 1, **characterised in that** the comminution device (3) is a cylinder mill.

7. A process according to Claim 1, **characterised in that** the heating bath (7) is at a temperature of 40 - 70°C.

8. A process according to Claim 1, **characterised in that** the multi-layer pane (8) of glass is fed by sieve-type transport devices (2; 6) to the individual stations.

9. A process according to Claim 8, **characterised in that** the transport devices (2; 6) have gripper systems at their lateral edges to hold the multi-layer pane (8) of glass.

10. A process according to Claim 1, **characterised in that** the loosening/separating device (9) performs separation by means of a highpressure water jet.

11. A process according to Claim 1, **characterised in that** the loosening/separating device (9) performs separation by means of a scraper.

## Revendications

1. Procédé de séparation de verre et de feuilles, notamment de vitres composites, dans lequel :
- la vitre composite (8) est acheminée vers un dispositif de fragmentation (3) et est brisée,
caractérisé en ce que les vitres composites (8) brisées sont chauffées dans un bain chaud (7) et la séparation restante du verre (8.1) et de la feuille (8.2) s'effectue au moyen d'un dispositif de séparation par détachement (9).

2. Procédé selon la revendication 1, caractérisé en ce que le dispositif de fragmentation (3) est un convertisseur d'énergie blindé.

3. Procédé selon la revendication 1 ou 2, caractérisé en ce que le convertisseur d'énergie envoie directement une impulsion de haute puissance (15) sur la vitre composite (8).

4. Procédé selon une ou plusieurs des revendications précédentes, caractérisé en ce que l'impulsion de haute puissance (15) présente une énergie de 2 à 8 kJ par impulsion.

5. Procédé selon une ou plusieurs des revendications précédentes, caractérisé en ce que l'impulsion de haute puissance (15) présente une fréquence de 10 à 40 impulsions.

6. Procédé selon la revendication 1, caractérisé en ce que le dispositif de fragmentation (3) est une cage de rouleaux.

7. Procédé selon la revendication 1, caractérisé en ce que le bain chaud (7) présente une température comprise entre 40 et 70°C.

8. Procédé selon la revendication 1, caractérisé en ce que l'amenée de la vitre composite (8) aux différents postes s'effectue au moyen de dispositifs de transport (2 ; 6) du type tamis.

9. Procédé selon la revendication 8, caractérisé en ce que les dispositif de transport (2 ; 6) comportent sur leurs bords latéraux des systèmes de prise pour tenir la vitre composite (8).

10. Procédé selon la revendication 1, caractérisé en ce que la séparation par le dispositif de séparation par détachement (9) s'effectue au moyen d'un jet d'eau sous haute pression.

11. Procédé selon la revendication 1, caractérisé en ce que la séparation par le dispositif de séparation par détachement (9) s'effectue au moyen d'un racloir.
